# EUROPEAN PATENT APPLICATION

(11) **EP 4 276 988 A1**
(43) Date of publication of application: **15.11.2023**
(21) Application number: 22860065.6
(22) Date of filing: 06.07.2022
(51) Int. Cl.: H01M 50/169, H01M 50/15, H01M 50/14

(54) **BATTERY CELL, BATTERY, AND DEVICE USING BATTERY**

(30) Priority: 24.08.2021 CN 202122006534 U
(71) Applicant: Contemporary Amperex Technology Co., Limited, Ningde, Fujian 352100 (CN)
(72) Inventor: LIU, Yanyu, Ningde, Fujian 352100 (CN); ZHENG, Yulian, Ningde, Fujian 352100 (CN); HUANG, Shoujun, Ningde, Fujian 352100 (CN); CHEN, Xinxiang, Ningde, Fujian 352100 (CN); WANG, Peng, Ningde, Fujian 352100 (CN)
(74) Representative: Holt, Lucy Rose
(86) International application number: PCT/CN2022/104192
(87) International publication number: WO 2023/024719

(57) **Abstract**

Embodiments of this application provide a battery cell, a battery, and an apparatus using a battery, where the battery cell includes: a housing with an opening; and an end cover covering the opening. The housing and the end cover are welded together to form a fusion zone. The end cover is provided with a first stress-relieving groove on an inner surface. The first stress-relieving groove is configured to recess from the inner surface of the end cover in a direction leaving the inside of the battery cell, so as to relieve stress produced by welding of the housing and the end cover. The technical solutions provided in the embodiments of this application can enhance safety performance of batteries.

## Description

### CROSS-REFERENCE TO RELATED APPLICATIONS

This application claims priority to Chinese Patent Application No. 202122006534.3, filed on August 24, 2021 and entitled "BATTERY CELL, BATTERY, AND APPARATUS USING BATTERY", which is incorporated herein by reference in its entirety.

### TECHNICAL FIELD

This application relates to the field of battery technologies, and in particular, to a battery cell, a battery, and an apparatus using a battery.

### BACKGROUND

With the economic development, battery technologies have found wide application in various fields, especially in transport means such as electric vehicles. A traction battery is a core component of a vehicle and is vital to safe driving. The safety performance of traction batteries has been one of the most important indicators to evaluate the performance of such batteries.

### SUMMARY

Embodiments of this application provide a battery cell, a battery, and an apparatus using a battery, able to improve safety performance of batteries.

According to a first aspect, an embodiment of this application provides a battery cell, including: a housing with an opening; and an end cover covering the opening; where the housing and the end cover are welded together, with a fusion zone formed; and the end cover is provided with a first stress-relieving groove on an inner surface, where the first stress-relieving groove is configured to recess from the inner surface of the end cover in a direction leaving the inside of the battery cell, so as to relieve stress produced by welding of the housing and the end cover.

Because welding is usually conducted on an outer side of a joint between the end cover and the housing, the welding will produce a relatively large fusion zone on an outer surface of the joint between the end cover and the housing. The closer the welding is to the inner surface of the end cover, the shorter the distance is between the edge and center of the fusion zone. The foregoing solution used, where the end cover is provided with the first stress-relieving groove on the inner surface, stiffness of the end cover near a welding heat affected zone is reduced, and stress deformation of a stress concentration area is alleviated by deformation of the first stress-relieving groove on the end cover, reducing stress concentration at the heat affected zone, and preventing early fatigue failure of the welding part of the battery cell in vibration conditions. In addition, the first stress-relieving groove is allowed to be closer to the fusion zone while avoiding the fusion zone, thus making stress relieving more effective, further enhancing safety performance of the battery.

In some embodiments, when projected in a thickness direction of the end cover, a projection of the first stress-relieving groove overlaps at least partially with a projection of the fusion zone.

The foregoing solution used, where the projection of the first stress-relieving groove overlaps at least partially with the projection of the fusion zone in the thickness direction of the end cover, the first stress-relieving groove is closer to the fusion zone from the inner side of the end cover, thus reducing stiffness of the end cover near the fusion zone, making stress relieving more effective.

In some embodiments, both the fusion zone and the first stress-relieving groove are distributed annularly, and the first stress-relieving groove is inward of the fusion zone.

The provision of the annularly distributed first stress-relieving groove distributed annularly, which corresponds to the fusion zone distributed annularly, helps to relieve stress produced at all positions by the welding of the housing and the end cover.

In some embodiments, when projected in a direction perpendicular to the thickness direction of the end cover, a projection of the first stress-relieving groove overlaps at least partially with a projection of the fusion zone.

The foregoing solution used, where the projection of the first stress-relieving groove overlaps at least partially with the projection of the fusion zone in the direction perpendicular to the thickness direction of the end cover, the stress-relieving groove is closer to the fusion zone on the outer surface of the end cover, able to release most stress produced at the fusion zone extending from the outer surface of the end cover to the inner surface of the end cover. In addition, this can also reduce the stiffness of the end cover near the fusion zone, thus improving the effect of stress relieving.

In some embodiments, the end cover is further provided with a second stress-relieving groove on the outer surface. The second stress-relieving groove is inward of the fusion zone, and the second stress-relieving groove is configured to recess from the outer surface of the end cover in a direction approaching the inside of the battery cell, so as to relieve the stress produced by the welding of the housing and the end cover.

The foregoing solution used, where the end cover is provided with the second stress-relieving groove on the outer surface, stress produced by welding conducted near the outer surface of the end cover is partially relieved by the second stress-relieving groove. The second stress-relieving groove has a smaller distance to the fusion zone on the outer surface of the end cover, and thus can relieve the stress at this part more effectively, which further improves the effectiveness of overall stress relieving.

In some embodiments, the first stress-relieving groove is closer to the fusion zone than the second stress-relieving groove.

The foregoing solution used, where the first stress-relieving groove is closer to the fusion zone than the second stress-relieving groove, the second stress-relieving groove is kept some distance away from the fusion zone, thus preventing materials in a weld pool from being leaked to the second stress-relieving groove to cause a rosin joint and affect the effectiveness of stress relieving.

In some embodiments, when projected in the thickness direction of the end cover, a projection of the first stress-relieving groove and a projection of the second stress-relieving groove are completely separate.

The foregoing solution used, where the projection of the first stress-relieving groove and the projection of the second stress-relieving groove are completely separate, strength of the end cover can be guaranteed without increase in thickness of the end cover. This spares the need to increase the thickness of the end cover to prevent overlap between the first stress-relieving groove and the second stress-relieving groove, thus keeping energy density of the battery cell unaffected. This also helps to increase depth of the first stress-relieving groove and the second stress-relieving groove, thus enhancing the effectiveness of stress relieving.

In some embodiments, in the thickness direction of the end cover, depth of the first stress-relieving groove and/or the second stress-relieving groove is 30-50% of thickness of the end cover.

The depth of the first stress-relieving groove and/or second stress-relieving groove, if excessive, can result in a shortage of strength of the end cover, and if not enough, is not good for stress relieving. With the depth of the first stress-relieving groove and/or second stress-relieving groove set to 30-50% of the thickness of the end cover, the first stress-relieving groove and/or second stress-relieving groove is able to provide some stress relief while the strength of the end cover is guaranteed.

In some embodiments, cross sections of the first stress-relieving groove and the second stress-relieving groove are rectangular in shape in the thickness direction of the end cover.

The cross sections of the first stress-relieving groove and the second stress-relieving groove being rectangular in shape in the thickness direction of the end cover not only facilitates the ease of processing but also makes the first stress-relieving groove and the second stress-relieving groove closer to the fusion zone, helpful for stress relieving.

According to a second aspect, an embodiment of this application provides a battery including the battery cell according to the first aspect.

According to a third aspect, an embodiment of this application provides an apparatus using a battery, the apparatus including the battery according to the second aspect, where the battery is configured to supply electric energy.

### BRIEF DESCRIPTION OF DRAWINGS

To describe technical solutions in embodiments of this application more clearly, the following briefly describes accompanying drawings required for describing the embodiments of this application. Apparently, the accompanying drawings in the following descriptions show merely some embodiments of this application, and persons of ordinary skill in the art may still derive other drawings from the accompanying drawings without creative efforts.
FIG. 1 is a schematic structural diagram of a vehicle according to some embodiments of this application;
FIG. 2 is a schematic exploded view of a battery according to some embodiments of this application;
FIG. 3 is a schematic structural diagram of a battery module according to some embodiments of this application.
FIG. 4 is a schematic exploded view of a battery cell according to some embodiments of this application;
FIG. 5 is a schematic structural diagram of the battery cell in FIG. 4;
FIG. 6 is a cross-sectional view of the battery cell in FIG. 5 along A-A;
FIG. 7 is a locally enlarged view of a location B in FIG. 6; and
FIG. 8 is a locally enlarged view of a battery cell according to another embodiment of this application, as compared to FIG. 7.

Reference signs are described as follows:
1. vehicle; 2. battery; 3. controller; 4. motor; 5. box;
51. first box portion; 52. second box portion; 53. accommodating space;
20. battery cell; 21. end cover; 22. electrode assembly; 23. housing; 24. fusion zone;
200. battery module;
211. electrode terminal; 212. first stress-relieving groove; 213. second stress-relieving groove;
221. tab;
23 1. opening;
X. direction perpendicular to thickness direction of the end cover; and
Y thickness direction of the end cover.

### DESCRIPTION OF EMBODIMENTS

To make objectives, technical solutions, and advantages of embodiments of this application clearer, the following clearly describes the technical solutions in the embodiments of this application with reference to accompanying drawings in the embodiments of this application. Apparently, the embodiments described are some rather than all embodiments of this application. All other embodiments obtained by a person of ordinary skill in the art based on the embodiments of this application without creative efforts shall fall within the protection scope of this application.

The following further describes implementations of this application in detail with reference to the accompanying drawings and embodiments. The following detailed description of embodiments and the accompanying drawings are used to illustrate the principle of this application, rather than to limit the scope of this application, which means this application is not limited to the embodiments as described.

In the descriptions of this application, it should be noted that, unless otherwise stated, "plurality" means two or more, and the terms "upper", "lower", "left", "right", "inside", "outside", and the like are merely intended to help the descriptions of this application and simplify the descriptions rather than to indicate or imply that apparatuses or components referred to must have specified orientations or be constructed and manipulated with specified orientations. Therefore, the terms shall not be construed as limitations on this application. In addition, the terms "first" and "second" are merely intended for a purpose of description and shall not be understood as an indication or implication of relative importance. "Perpendicular" means being perpendicular with an allowable range of error other than being strictly perpendicular. "Parallel" means being parallel with an allowable range of error other than being strictly parallel.

Orientation terms in the following descriptions are all directions as shown in the drawings, which do not limit the specific structure of this application. In the descriptions of this application, it should be further noted that unless otherwise specified and defined explicitly, the terms "mount", "connect", and "join" should be understood in their general senses. For example, the terms may refer to a fixed connection, a detachable connection, or an integral connection, and may refer to a direct connection or an indirect connection through an intermediate medium. A person of ordinary skill in the art can understand specific meanings of these terms in this application as appropriate to specific situations.

A battery mentioned in the embodiments of this application is a single physical module that includes one or more battery cells for providing a higher voltage and capacity. For example, the battery mentioned in this application may include a battery module, a battery pack, or the like. The battery typically includes a box for encapsulating one or more battery cells. The box can prevent liquids or other foreign matters from affecting charging or discharging of the battery cell.

The battery cell includes an electrode assembly and an electrolyte. The electrode assembly includes a positive electrode plate, a negative electrode plate, and a separator. Working of the battery cell mainly relies on migration of metal ions between the positive electrode plate and the negative electrode plate. The positive electrode plate includes a positive electrode current collector and a positive electrode active substance layer. The positive electrode active substance layer is applied on a surface of the positive electrode current collector. The part of positive electrode current collector uncoated with the positive electrode active substance layer extends beyond the part of positive electrode current collector coated with the positive electrode active substance layer, and the part of positive electrode current collector uncoated with the positive electrode active substance layer may be partially used as a positive tab. A lithium-ion battery is used as an example, for which, the positive electrode current collector may be made of aluminum, and the positive electrode active substance may be lithium cobaltate, lithium iron phosphate, ternary lithium, lithium manganate, or the like. The negative electrode plate includes a negative electrode current collector and a negative electrode active substance layer. The negative electrode active substance layer is applied on a surface of the negative electrode current collector. The part of negative electrode current collector uncoated with the negative electrode active substance layer extends beyond the part of negative electrode current collector coated with the negative electrode active substance layer, and the part of negative electrode current collector uncoated with the negative electrode active substance layer may be partially used as a negative tab. The negative electrode current collector may be made of copper, and the negative electrode active substance may be carbon, silicon, or the like. In order to guarantee that no fusing occurs when a large current passes, a plurality of positive tabs are provided and stacked together, and a plurality of negative tabs are provided and stacked together. In addition, the electrode assembly may be a wound structure or a laminated structure, but the embodiments of this application are not limited thereto.

Currently, a battery cell generally includes a housing, an electrode assembly, and an end cover. The end cover covers an opening of the housing, so as to provide a sealed space for the electrode assembly and the electrolyte. The housing and the end cover are usually welded together.

The applicant has found that in practical use of a traction battery, battery cells in it are subject to random vibration conditions transferred by the battery, due to vehicle vibration. A welding part between the housing and the end cover is more vulnerable to fatigue failure in vibration conditions because of structural stress concentration, which will greatly compromise safe driving.

Considering that, the inventors provided, on an outer surface of the end cover, a stress-relieving groove close to the welding part, so as to relieve stress produced by welding of the end cover and the housing. However, the inventors have found that a relatively large fusion zone is formed due to the welding of the end cover and the housing, and therefore, if the stress-relieving groove on the outer surface is too close to the fusion zone, materials in a weld pool might be leaked to the stress-relieving groove, resulting in a rosin joint at the welding part and affecting the effectiveness of stress relieving; and if the stress-relieving groove is too far from the fusion zone, the effect of stress relieving is not desirable.

Given those problems, the inventors have found through further research that, for the fusion zone formed by the welding of the end cover and the housing, its width perpendicular to the melting depth usually reduces as the welding depth increases, meaning distance between the edge and center of the fusion zone will be increasingly shorter.

On such basis, the inventors provide a battery cell, where the battery cell is provided with a stress-relieving groove on an inner surface of the end cover, so as to relieve stress produced by welding of the housing and the end cover. Providing the stress-relieving groove on the inner side of the end cover can not only prevent materials in a weld pool from being leaked to the groove and thus avoid a rosin joint, but also allow the stress-relieving groove to be closer to the fusion zone, thus making stress relieving more effective and avoiding fatigue failure at the welding part between the housing and the end cover, improving safety performance of the battery.

The battery cell described in the embodiments of this application may be used in batteries and apparatuses using a battery.

The apparatus using a battery may be a vehicle, a mobile phone, a portable device, a notebook computer, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, and an electric toy airplane. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of this application impose no special limitation on the foregoing apparatus using a battery.

For ease of description, the apparatus using a battery being a vehicle is used as an example for description of the following embodiments.

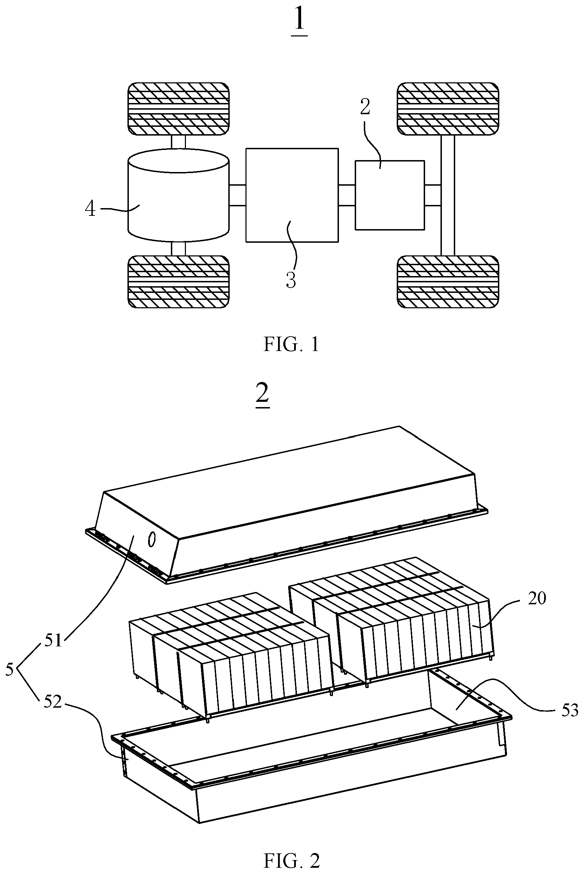

Refer to FIG. 1. FIG. 1 is a schematic structural diagram of a vehicle 1 according to some embodiments of this application. As shown in FIG. 1, a battery 2 is provided inside of the vehicle 1, where the battery 2 is a physical module that includes one or more battery cells for providing a higher voltage and capacity. For example, the battery 2 mentioned in this application may include a battery module, a battery pack, or the like. The battery 2 may be provided at the bottom, head, or tail of the vehicle 1. The battery 2 may be configured to supply power to the vehicle 1. For example, the battery 2 may be used as an operational power source for the vehicle 1. The vehicle 1 may further include a controller 3 and a motor 4, where the controller 3 is configured to control the battery 2 to supply power to the motor 4, for example, to satisfy power needs of start, navigation, and driving of the vehicle 1.

In some embodiments of this application, the battery 2 can be used as not only an operational power source for the vehicle 1 but also a traction power source for the vehicle 1, replacing or partially replacing fossil fuel or natural gas to provide driving traction for the vehicle 1.

Refer to FIG. 2. FIG. 2 is a schematic exploded view of the battery 2 according to some embodiments of this application.

As shown in FIG. 2, the battery 2 includes a box 5 and a battery cell 20, and the battery cell 20 is accommodated in the box 5.

The box 5 is configured to accommodate the battery cell 20, and the box 5 may have various structures. In some embodiments, the box 5 may include a first box portion 51 and a second box portion 52. The first box portion 51 and the second box portion 52 fit together to jointly define an accommodating space 53 for accommodating the battery cell 20. The second box portion 52 may be a hollow structure with an opening at one end, the first box portion 51 may be a plate-shaped structure, and the first box portion 51 covers the opening side of the second box portion 52, so as to form the box 5 having the accommodating space 53. The first box portion 51 and the second box portion 52 may alternatively both be hollow structures with an opening at one end, and the opening side of the first box portion 51 is engaged with the opening side of the second box portion 52, so as to form the box 5 having the accommodating space 53. Certainly, the first box portion 51 and the second box portion 52 may be in various shapes, for example, cylinder or cuboid.

In order to improve airtightness after connection of the first box portion 51 and the second box portion 52, a sealing element, such as sealing gum and a sealing ring, may also be disposed between the first box portion 51 and the second box portion 52.

Assume that the first box portion 51 fits on the top of the second box portion 52. In this case, the first box portion 51 may also be referred to as an upper box cover, and the second box portion 52 may also be referred to as a lower box.

The battery 2 may include a plurality of battery cells 20. The plurality of battery cells 20 may be connected in series, parallel, or series-parallel, where being connected in series-parallel means a combination of series and parallel connections of the plurality of battery cells 20. The plurality of battery cells 20 may be directly connected in series, parallel, or series-parallel, and a whole constituted by the plurality of battery cells 20 is accommodated in the box 5. Certainly, a plurality of battery cells 20 may first be connected in series, parallel, or series-parallel to constitute a battery pack, and then a plurality of battery packs are connected in series, parallel, or series-parallel to constitute a whole which is accommodated in the box 5.

According to different power needs, the quantity of battery cells 20 may be any numerical value. The plurality of battery cells 20 may be connected in series, parallel, or series-parallel to provide a greater capacity or power. Alternatively, a plurality of battery cells 20 may be connected in series, parallel, or series-parallel to form a battery module first, and then a plurality of battery modules are connected in series, parallel, or series-parallel to form the battery 2. In other words, the plurality of the battery cells 20 may be directly combined into the battery 2, or may first be combined into battery modules which are then combined into the battery 2 and accommodated in a box.

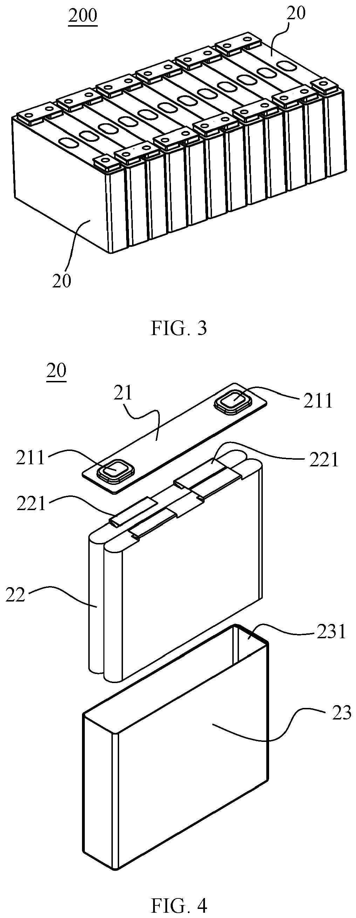

Refer to FIG. 3. FIG. 3 is a schematic structural diagram of a battery module 200 according to some embodiments of this application. As shown in FIG. 3, because each battery 2 may include a large quantity of battery cells 20, for ease of installation, the battery cells 20 may be arranged by group, and each group of battery cells 20 form a battery module 200. The battery 2 may include a plurality of battery modules 200. These battery modules 200 may be connected in series, parallel, or series-parallel.

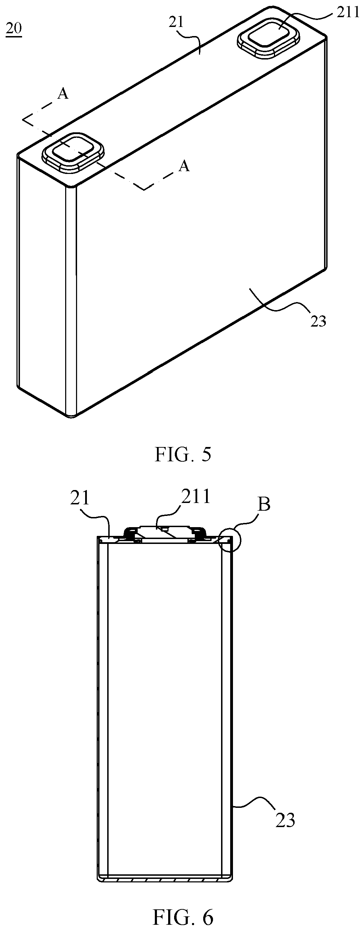

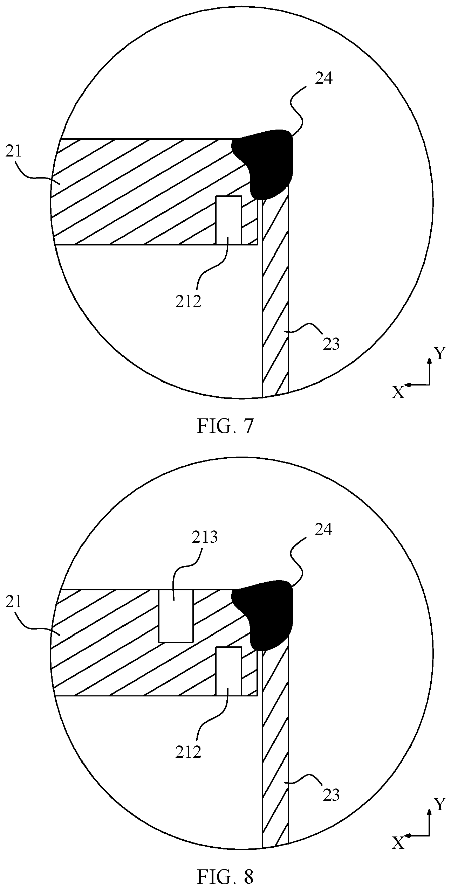

FIG. 4 is a schematic exploded view of the battery cell 20 according to some embodiments of this application; FIG. 5 is a schematic structural diagram of the battery cell 20 in FIG. 4; FIG. 6 is a cross-sectional view of the battery cell 20 shown in FIG. 5 along A-A; and FIG. 7 is a locally enlarged view of a location B in FIG. 6.

Refer to FIG. 4 to FIG. 7. In some embodiments of this application, the battery cell 20 includes an end cover 21 and a housing 23. The housing 23 has an opening 231, and the end cover 21 covers the opening 231. The housing 23 and the end cover 21 are welded together to form a fusion zone 24. The end cover 21 is provided with a first stress-relieving groove 212 on an inner surface. The first stress-relieving groove 212 is configured to recess from the inner surface of the end cover 21 in a direction leaving the inside of the battery cell 20, so as to relieve stress produced by welding of the housing 23 and the end cover 21.

Refer to FIG. 4. The battery cell 20 is a smallest unit for forming the battery 2. In some embodiments of this application, the battery cell 20 may include a lithium-ion secondary battery cell, a lithium-ion primary battery cell, a lithium-sulfur battery cell, a sodium-lithium-ion battery cell, a sodium-ion battery cell, a magnesium-ion battery cell, or the like. This is not limited in the embodiments of this application either. The battery cell 20 may be cylindrical, flat, rectangular, or of other shapes, and this is also not limited in the embodiments of this application. For ease of illustration, a rectangular battery cell 20 is used as an example in all the following embodiments. Battery cells 20 typically fall in three types by packaging method: cylindrical cell, prismatic cell, and pouch cell. The type of battery is not limited in the embodiments of this application either.

Still refer to FIG. 4. The battery cell 20 includes the end cover 21, an electrode assembly 22, and the housing 23. The housing 23 is configured to accommodate the electrode assembly 22. The housing 23 may have various shapes and sizes. Specifically, the shape and size of the housing 23 may be determined according to the specific shape and size of one or more electrode assemblies 22. In some embodiments, the housing 23 is a hollow cuboid. In some other embodiments, the housing 23 may be cylindrical or in other shapes. One end of the housing 23 is the opening 231. The end cover 21 covers the opening 231 and is joined with the housing 23 to form an enclosed chamber for accommodating the electrode assembly 22. The chamber may be filled with electrolyte. In some embodiments, the end cover 21 may be provided with an electrode terminal 211, and the electrode assembly 22 is provided with a tab 221. The electrode terminal 211 may be configured to be electrically connected with the tab 221 to output electric energy of the battery cell 20. For each electrode terminal 211, a corresponding current collecting component may be provided. The current collecting component may be disposed between the end cover 21 and the tab 221 to electrically connect the electrode terminal 211 and the tab 221. The end cover 21 may be provided with other functional components, for example, a pressure relief mechanism for relieving internal pressure when pressure or temperature inside the battery cell 20 reaches a threshold. The housing 23 and the end cover 21 may be made of various materials, for example, copper, iron, aluminum, stainless steel, or aluminum alloy.

Refer to FIG. 5, FIG. 6, and FIG. 7. When the end cover 21 has covered the opening 231 of the housing 23, the end cover 21 and the housing 23 are welded together. The welding of the end cover 21 and the housing 23 may be laser welding or other welding methods depending on the size and material of the battery cell 20. This is not limited in the embodiments of this application. The housing 23 and the end cover 21 are welded together to form the fusion zone 24. The fusion zone 24 refers to a joining part formed by solidification of parts of the housing 23 and the end cover 21 melted at a high temperature. In a thickness direction Y of the end cover 21, the fusion zone 24 may extend from the outer surface to the inner surface at the joint between the end cover 21 and the housing 23. In this case, an edge to center distance of the fusion zone 24 close to the inner surface is shorter than an edge to center distance of the fusion zone 24 on the outer surface. The fusion zone 24 extends for some distance from the outer surface to the inner surface at the joint between the end cover 21 and the housing 23. In this case, no fusion zone 24 is present on the inner surfaces of the end cover 21 and the housing 23.

Still refer to FIG. 7. The first stress-relieving groove 212 is provided on the inner surface of the end cover 21. The first stress-relieving groove 212 is configured to recess from the inner surface of the end cover 212 in a direction leaving the inside of the battery cell 20, so as to relieve stress produced by the welding of the housing 23 and the end cover 21. The first stress-relieving groove 212 may be directly formed on the inner surface during preparation of the end cover 21, or formed by grooving the inner surface of the end cover 21 when the preparation of the end cover 21 has been completed.

The welding of the end cover 21 and the housing 23 is usually conducted on the outer surface, in the process of which, the fusion zone 24 having a relatively large area is formed on the outer surface of the end cover 21. The closer the welding is to the inner surface, the shorter distance is between the edge and center of the fusion zone 24 and the center, where the edge is perpendicular to the joint between the end cover 21 and the housing 23. On such basis, in technical solutions of embodiments of this application, the end cover 21 is provided with the first stress-relieving groove 212 on the inner surface. The first stress-relieving groove 212 can prevent leaking of materials from a weld pool, thus avoiding a rosin j oint. In addition, the first stress-relieving groove 212 is able to be closer to the fusion zone 24 without interfering with the fusion zone 24. This makes the end cover 21 have less stiffness between the first stress-relieving groove 212 and the fusion zone 24, producing a better effect of stress relieving, and better preventing early fatigue failure of the fusion zone 24 at the welding part of the battery cell 20 in vibration conditions, thus improving safety performance of the battery.

Still refer to FIG. 7. In some embodiments of this application, when projected in the thickness direction Y of the end cover 21, a projection of the first stress-relieving groove 212 overlaps at least partially with a projection of the fusion zone 24. In some embodiments, the projection of the first stress-relieving groove 212 is completely covered by the projection of the fusion zone 24; in some other embodiments, the projection of the first stress-relieving groove 212 overlaps partially with the projection of the fusion zone 24. As such, compared with a stress-relieving groove made into the outer surface at the joint between the end cover 21 and the housing 23, where the stress-relieving groove on the outer surface needs to avoid the fusion zone 24, so it is relatively far from the fusion zone 24, the first stress-relieving groove 212 made into the inner surface is closer to the fusion zone 24, making the end cover 21 have less stiffness at the portion close to the fusion zone 24, thus producing a better effect of stress relieving.

Refer to FIG. 5 and FIG. 7 now. In some embodiments of this application, both the fusion zone 24 and the first stress-relieving groove 212 are distributed annularly. The first stress-relieving groove 212 is inward of the fusion zone 24.

The fusion zone 24 is at the periphery of the end cover 21 and is distributed annularly along the periphery of the end cover 21. Stress produced by welding may scatter to all positions around the end cover 21 and near the fusion zone 24. The first stress-relieving groove 212 is inward of the fusion zone 24. Corresponding to the fusion zone 24 that is distributed annularly, the first stress-relieving groove 212 is also distributed annularly. In this way, the first stress-relieving groove 212 is able to relieve the stress produced by welding at all positions, and stress produced at all welding points during the welding of the housing 23 and the end cover 21 can be relieved by the first stress-relieving groove 212 a short distance away, thereby enhancing the effectiveness of stress relieving.

In some embodiments, the first stress-relieving groove 212 may be a complete ring structure. In some other embodiments, the first stress-relieving groove 212 may consist of several grooves distributed annularly, meaning multiple first stress-relieving grooves 212 are spaced inward of the annular fusion zone 24. In this way, stress produced by the annular fusion zone 24 can be relieved by the first stress-relieving groove 212 a short distance away, helping to relieve some of the stress.

Refer to FIG. 7 still. In some embodiments of this application, when projected in a direction X perpendicular to the thickness direction of the end cover 21, a projection of the first stress-relieving groove 212 overlaps at least partially with a projection of the fusion zone 24.

The projection in the direction X perpendicular to the thickness direction of the end cover 21 means a projection in any direction that is perpendicular to the thickness direction Y of the end cover 21. For example, when the battery cell 20 is cylindrical, the projection in the direction X perpendicular to the thickness direction of the end cover 21 may be a projection in the radial direction of the cylindrical battery cell 20; when the battery cell 20 is rectangular, the projection in the direction X perpendicular to the thickness direction of the end cover 21 may be a projection in a length or width direction of the end cover 21. When both the fusion zone 24 and the first stress-relieving groove 212 are distributed annularly, the projections of the first stress-relieving groove 212 and the fusion zone 24 in the direction X perpendicular to the thickness direction of the end cover 21 at least partially overlapping makes the first stress-relieving groove 212 closer to the fusion zone 24 in the thickness direction Y of the end cover 21, so the end cover 21 is less stiff at the part near the fusion zone 24, producing a better effect of stress relieving.

FIG. 8 is a locally enlarged view of a battery cell according to another embodiment of this application, as compared to FIG. 7. Refer to FIG. 8. In some embodiments of this application, the end cover 21 is further provided with a second stress-relieving groove 213 on an outer surface. The second stress-relieving groove 213 is inward of the fusion zone 24. The second stress-relieving groove 213 is configured to recess from the outer surface of the end cover 21 in a direction approaching the inside of the battery cell 20, so as to relieve stress produced by the welding of the housing 23 and the end cover 21.

The second stress-relieving groove 213 may be a recession of a specified depth from the outer surface of the end cover 21 in the direction approaching the inside of the battery cell 20. On the premise that a strength requirement for the end cover 21 is met, depth of the second stress-relieving groove may be as great as possible. Optionally, the depth of the second stress-relieving groove 213 may be set according to a melting depth of the fusion zone 24. For example, when projected in the direction X perpendicular to the thickness direction of the end cover 21, the depth of the second stress-relieving groove 213 may be greater than depth of the fusion zone 24. In this way, the second stress-relieving groove 213 is able to relieve stress at all melting depths of the fusion zone 24. The second stress-relieving groove 213 may be distributed annularly like the first stress-relieving groove 212. Alternatively, multiple second stress-relieving grooves 213 may be spaced on the end cover 21. This is not limited in this application.

The second stress-relieving groove 213 can be used to reduce stiffness of the outer surface of the end cover 21 near a welding heat affected zone so as to alleviate stress deformation of a stress concentration area with deformation of the second stress-relieving groove 213 on the end cover 21. Thus, the second stress-relieving groove 213 works together with the first stress-relieving groove 212 to relieve the stress produced by the welding of the end cover 21 and the housing 23, further enhancing the effectiveness of stress relieving.

Still refer to FIG. 8. In some embodiments of this application, the first stress-relieving groove 212 is closer to the fusion zone 24 than the second stress-relieving groove 213.

The first stress-relieving groove 212 and the second stress-relieving groove 213 being closer to the fusion zone 24 leads to more effective stress relieving. However, the second stress-relieving groove 213 is provided on the outer surface of the end cover 21. If it is too close to the fusion zone 24, during the welding of the housing 23 and the end cover 21, materials in the weld pool are likely to be leaked to the second stress-relieving groove 213 and cause a rosin joint. And as the melting goes deeper, the edge to center distance of the fusion zone 24 becomes shorter. Therefore, the first stress-relieving groove 212 may be designed to be closer to the fusion zone 24 than the second stress-relieving groove 213. For one aspect, doing so could keep some distance between the second stress-relieving groove 213 and the fusion zone 24, preventing materials in the weld pool from being leaked to the second stress-relieving groove 213 and causing a rosin joint. For another aspect, this can produce a better effect in relieving the stress produced by welding.

Continue referring to FIG. 8. In some embodiments of this application, when projected in the thickness direction Y of the end cover 21, the projection of the first stress-relieving groove 212 and the projection of the second stress-relieving groove 213 are completely separate.

With the projections of the first stress-relieving groove 212 and the second stress-relieving groove 213 completely separate, the first stress-relieving groove 212 and the second stress-relieving groove 213 can have their largest possible depths when strength of the end cover 21 is not affected, thus improving effectiveness of stress relieving by the first stress-relieving groove 212 and the second stress-relieving groove 213.

If the projection of the first stress-relieving groove 212 and the projection of the second stress-relieving groove 213 partially overlap, the first stress-relieving groove 212 and the second stress-relieving groove 213 need to be deep enough to ensure effective stress relieving, while to ensure the strength of the end cover 21, enough thickness needs to be maintained between the first stress-relieving groove 212 and the second stress-relieving groove 213 in the thickness direction Y of the end cover 21. In this case, thickness of the end cover 21 is increased, which affects energy density of the battery cell 20. The first stress-relieving groove 212 and the second stress-relieving groove 213 having no overlap guarantees the strength of the end cover 21, without increase in the thickness of the end cover 21, thereby ensuring that the energy density of the battery cell 20 is not affected.

Still refer to FIG. 8. In some embodiments of this application, in the thickness direction Y of the end cover 21, depth of the first stress-relieving groove 212 and/or second stress-relieving groove 213 is 30-50% of thickness of the end cover 21.

The depth of first stress-relieving groove 212 and/or second stress-relieving groove 213, if excessive, can result in non-guaranteed strength of the end cover 21, and if not enough, is not good for stress relieving. With the depth of the first stress-relieving groove 212 and/or the second stress-relieving groove 213 set to 30-50% of the thickness of the end cover, the first stress-relieving groove 212 and/or second stress-relieving groove 213 can effectively relieve the stress while the strength of the end cover 21 is guaranteed.

Continue referring to FIG. 8. In some embodiments of this application, cross sections of the first stress-relieving groove 212 and the second stress-relieving groove 213 are rectangular in shape in the thickness direction Y of the end cover.

The cross sections of the first stress-relieving groove 212 and the second stress-relieving groove 213 being rectangular in shape not only facilitates the ease of processing but also makes the first stress-relieving groove 212 and the second stress-relieving groove 213 closer to the fusion zone 24, helpful for stress relieving. The first stress-relieving groove 212 and the second stress-relieving groove 213 may be directly formed during preparation of the end cover 21, or formed by grooving the inner and outer surfaces of the end cover 21 when the preparation of the end cover 21 has been completed. It should be noted that the cross sections, of the first stress-relieving groove 212 and the second stress-relieving groove 213 in the thickness direction Y of the end cover may alternatively be of other shapes, for example, trapezoid, circular arc, or triangle.

An embodiment of this application further provides a battery 2, where the battery 2 includes the battery cell 20 in the foregoing embodiments. For a description of the components of the battery 2, refer to the foregoing embodiments. Details are not described herein again.

An embodiment of this application further provides an apparatus using a battery, where the apparatus using a battery includes the battery 2 in the foregoing embodiments. Optionally, the apparatus using a battery may be a vehicle 1, a ship, a spacecraft, or the like.

Although this application has been described with reference to preferred embodiments, various modifications can be made to this application without departing from the scope of this application and components therein can be replaced with equivalents. In particular, as long as there is no structural conflict, the various technical features mentioned in the embodiments can be combined in any manners. This application is not limited to the specific embodiments disclosed in this specification, but includes all technical solutions falling within the scope of the claims.

## Claims

1. A battery cell, **characterized by** comprising:
a housing with an opening; and
an end cover, covering the opening; wherein
the housing and the end cover are welded together, with a fusion zone formed; and
the end cover is provided with a first stress-relieving groove on an inner surface, wherein the first stress-relieving groove is configured to recess from the inner surface of the end cover in a direction leaving the inside of the battery cell, so as to relieve stress produced by welding of the housing and the end cover.

2. The battery cell according to claim 1, **characterized in that** when projected in a thickness direction of the end cover, a projection of the first stress-relieving groove overlaps at least partially with a projection of the fusion zone.

3. The battery cell according to claim 1 or 2, **characterized in that** both the fusion zone and the first stress-relieving groove are distributed annularly, and the first stress-relieving groove is inward of the fusion zone.

4. The battery cell according to claim 3, **characterized in that** when projected in a direction perpendicular to the thickness direction of the end cover, a projection of the first stress-relieving groove overlaps at least partially with a projection of the fusion zone.

5. The battery cell according to any one of claims 1 to 4, **characterized in that** a second stress-relieving groove is further provided on an outer surface of the end cover, wherein the second stress-relieving groove is inward of the fusion zone, and the second stress-relieving groove is configured to recess from the outer surface of the end cover in a direction approaching the inside of the battery cell, so as to relieve stress produced by the welding of the housing and the end cover.

6. The battery cell according to claim 5, **characterized in that** the first stress-relieving groove is closer to the fusion zone than the second stress-relieving groove.

7. The battery cell according to claim 5 or 6, **characterized in that** when projected in the thickness direction of the end cover, a projection of the first stress-relieving groove and a projection of the second stress-relieving groove are completely separate.

8. The battery cell according to any one of claims 5 to 7, **characterized in that** in the thickness direction of the end cover, a depth of the first stress-relieving groove and/or the second stress-relieving groove is 30-50% of a thickness of the end cover.

9. The battery cell according to any one of claims 1 to 8, **characterized in that** cross sections of the first stress-relieving groove and the second stress-relieving groove are rectangular in shape in the thickness direction of the end cover.

10. A battery, **characterized by** comprising the battery cell according to any one of claims 1 to 9.

11. An apparatus using a battery, **characterized by** comprising the battery according to claim 10, wherein the battery is configured to supply electric energy.
